# FASCICULE DE BREVET EUROPEEN

(11) **EP 3 004 864 B1**
(45) Date de publication et mention de la délivrance du brevet: **13.01.2021**
(21) Numéro de dépôt: 14731705.1
(22) Date de dépôt: 22.05.2014
(51) Int. Cl.: G01N 29/11, G01N 29/44

(54) **PROCEDE D'INSPECTION PAR TRANSMISSION D'ULTRASONS AMELIORE**
VERBESSERTES VERFAHREN ZUR INSPEKTION DURCH ULTRASCHALLÜBERTRAGUNG
IMPROVED METHOD FOR INSPECTION BY THE TRANSMISSION OF ULTRASOUNDS

(30) Priorité: 30.05.2013 FR 1354956
(43) Date de publication de la demande: 13.04.2016
(73) Titulaire: Safran Aircraft Engines, 75015 Paris (FR)
(72) Inventeur: BROUSSAIS-COLELLA, Nicolas, F-77550 Moissy-Cramayel Cedex (FR); CHATELLIER, Jean-Yves, F-77550 Moissy-Cramayel Cedex (FR); DUVAL, Jérémy, F-77550 Moissy-Cramayel Cedex (FR)
(74) Mandataire: Regimbeau
(86) Numéro de dépôt international: PCT/FR2014/051202
(87) Numéro de publication internationale: WO 2014/191661

(56) Documents cités:
- DE-B3- 10 258 336
- FR-A1- 2 959 817
- US-A- 4 004 454
- US-A1- 2007 051 177
- US-A1- 2012 101 764

## Description

### DOMAINE DE L'INVENTION

L'invention concerne le domaine des procédés d'inspections non destructives d'objets par transmission d'ultrasons pour y déceler des anomalies internes, tels que des porosités, délaminages, fissures,... présentes dans le volume de l'objet inspecté ou des défauts de collage dans le cas où l'objet inspecté est formé par l'association de plusieurs pièces.

L'invention s'applique notamment à l'inspection de pièces à géométrie complexe telles que des aubes et des carters d'aubes de turbomachines.

### ETAT DE LA TECHNIQUE

On connaît déjà différentes techniques de contrôle non destructif par ultrasons. Une technique connue est le contrôle par réflexion, au cours de laquelle on effectue un balayage d'un objet à inspecter avec un faisceau d'ultrasons à un gain déterminé, et on mesure l'amplitude du faisceau réfléchi par l'objet pour détecter d'éventuelles altérations dans la structure interne de l'objet.

Cependant, le procédé de contrôle par réflexion d'ultrasons n'est pas adapté pour des objets réalisés en un matériau absorbant fortement les ultrasons, tel que par exemple les matériaux composites. Or on a désormais recours aux matériaux composites pour fabriquer des éléments de turbomachines, comme par exemple des aubes ou des carters d'aubes.

Dans ce cas, un procédé d'inspection plus adapté est le contrôle ultrasons par transmission en utilisant la représentation de type « C-Scan ».Cela implique un accès à deux faces opposées de la pièce à contrôler. Le récepteur est alors disposé en face de l'émetteur et il recueille l'énergie qui a été transmise à travers la pièce. Les réflecteurs tels que les interfaces ou anomalies, seront détectés par une diminution de cette énergie, mais il n'est pas possible de les localiser dans l'épaisseur de la pièce.

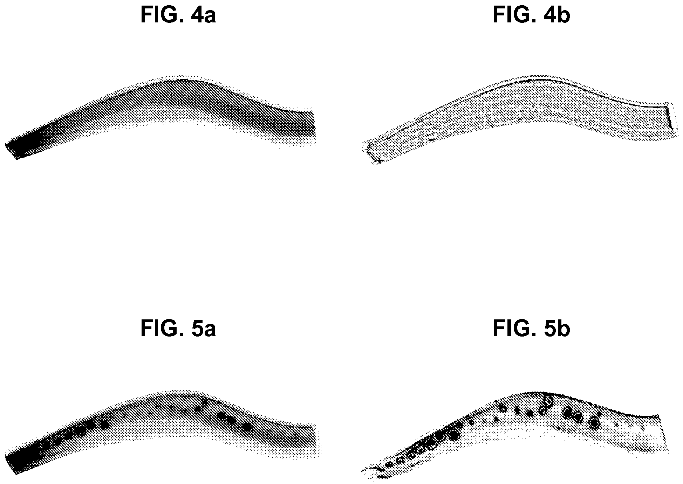

A partir de cette mesure d'amplitude, on réalise ensuite une cartographie représentant une projection de l'objet inspecté selon la direction du faisceau d'ultrasons, dont chaque point est coloré en fonction de l'amplitude. Une telle cartographie, réalisée au niveau d'un bord d'attaque d'aube de turbomachine, est représentée en figure 4a. Les zones plus sombres correspondent à des zones où l'amplitude du faisceau d'ultrasons transmis est faible, c'est-à-dire où l'atténuation est grande.

Or, la diminution de l'amplitude du faisceau d'ultrasons dépend à la fois de l'épaisseur de matériau traversé et des défauts éventuellement rencontrés ; par exemple, si une cavité se trouve dans l'objet inspecté, sur la trajectoire du faisceau d'ultrasons, le faisceau d'ultrasons n'est pas transmis au travers de cette cavité, et l'amplitude transmise au niveau de cette cavité est donc très diminuée par rapport à l'amplitude d'émission initiale.

Dans le cas où l'objet inspecté présente une géométrie complexe, ce qui est le cas par exemple d'aubes de turbomachines, ou de carters d'aubes, il est donc impossible, avec le procédé d'inspection par transmission d'ultrasons, de faire la différence entre une zone présentant un défaut et une zone où l'épaisseur de matériau à traverser est importante, ou encore un désalignement des sondes dû à la géométrie de la pièce.

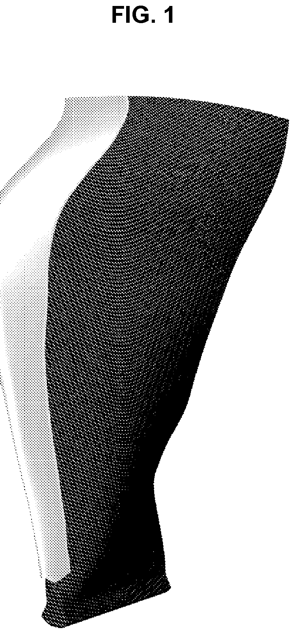

Par exemple, sur la figure 5a, la partie gauche de la figure correspond au pied de l'aube et la partie droite correspond à la tête de l'aube, cette aube étant représentée sur la figure 1. L'extrémité gauche de la cartographie sur la figure 5a correspondant au pied de l'aube présente une coloration foncée, indiquant une forte absorption des ultrasons à ce niveau de l'aube. Or, cette forte absorption peut être liée à un défaut dans ce pied où découler de l'épaisseur de l'aube à ce niveau, mais il n'est pas possible de le déterminer avec cette cartographie.

Par ailleurs le document US 2012/0101764 divulgue un procédé et un dispositif pour ajuster le niveau d'un signal de réponse d'un transducteur ultrasonore; dans le cadre d'une cartographie de l'objet à inspecter, on utilise des profils de gain, variables temporellement, déterminés au moyen d'un objet de référence.

Il existe donc un besoin pour un procédé d'inspection d'un objet permettant de s'affranchir de la complexité de la géométrie de l'objet inspecté, et permettant d'identifier des défauts dans la structure de l'objet inspecté indépendamment de l'épaisseur de l'objet.

Pour ce faire, un procédé pourrait comprendre des balayages multiples d'une même pièce avec des faisceaux d'ultrasons présentant à chaque balayage et chaque pas un gain différent. Cependant, puisque toutes les pièces doivent être inspectées avant d'être utilisées, ce procédé engendrerait une perte de temps trop importante.

### PRESENTATION DE L'INVENTION

L'invention a pour but de proposer un procédé d'inspection d'un objet permettant d'identifier immédiatement des défauts présents dans la structure de l'objet.

Un autre but de l'invention est de pouvoir être utilisée quelle que soit la géométrie de l'objet inspecté.

A cet égard, l'invention a pour objet un procédé d'inspection d'un objet par transmission d'ultrasons, dans lequel on met en oeuvre un balayage dudit objet par un faisceau d'ultrasons et une mesure de l'amplitude du faisceau d'ultrasons transmis à travers ledit objet, ladite mesure comprenant la conversion du faisceau d'ultrasons en signal électrique, l'application d'un gain d'amplification audit signal et la mesure de l'amplitude dudit signal, afin d'en déduire une cartographie dans laquelle chaque point d'une surface de projection dudit objet selon la direction d'exposition est associé à l'amplitude du faisceau d'ultrasons transmise audit point à travers ledit objet, le procédé comprenant les étapes consistant à :
- mettre en oeuvre ledit balayage et ladite mesure d'amplitude sur une pièce de référence présentant une géométrie identique à l'objet à inspecter, afin d'en déduire une cartographie de ladite pièce, le gain d'amplification appliqué pour la mesure d'amplitude étant un gain de référence prédéterminé,
- déterminer, pour une pluralité de points de la cartographie de la pièce de référence, des corrections de gain à apporter au gain de référence aux points correspondants du balayage pour obtenir une amplitude du faisceau d'ultrasons transmise à travers la pièce de référence constante pour l'ensemble des points de la cartographie,
- mettre en oeuvre ledit balayage et ladite mesure d'amplitude sur l'objet à inspecter, en appliquant aux différents points du balayage un gain d'amplification correspondant au gain de référence corrigé à partir des corrections de gain précédemment déterminées.

Avantageusement, mais facultativement, le procédé selon l'invention présente en outre au moins l'une des caractéristiques suivantes :
- on déduit de ladite mesure d'amplitude sur l'objet à inspecter une cartographie de l'objet et on analyse la cartographie ainsi obtenue afin de détecter une éventuelle anomalie quant à l'amplitude transmise à travers l'objet.
- l'objet à inspecter et la pièce de référence sont axisymétriques, la direction d'exposition du faisceau d'ultrasons est radiale par rapport à l'axe de symétrie, et la pièce de référence est balayée selon une ligne de ladite pièce à l'intersection de la surface de la pièce de référence avec un plan radial.
- l'objet à inspecter et la pièce de référence comprennent du matériau composite.
- l'amplitude constante transmise à travers la pièce de référence est supérieure à 60% de l'amplitude du faisceau d'ultrasons émis, et est avantageusement comprise entre 70 et 90% de ladite amplitude, et de préférence égale à 80% de ladite amplitude.
- la correction de gain à apporter au gain de référence en un point du balayage est déterminée simultanément au balayage du point correspondant de la pièce de référence.

L'invention porte également sur une utilisation du procédé d'inspection pour l'inspection d'une aube, notamment une aube formée en matériau composite et comprenant en outre un renfort en métal collé sur son bord d'attaque, ledit procédé permettant de détecter d'éventuelles anomalies de collage ou encore pour l'inspection d'un carter d'aubage.

L'invention a également pour objet un système d'inspection d'un objet par transmission d'ultrasons, pour la mise en oeuvre du procédé d'inspection qui précède, comprenant :
- une sonde d'émission d'un faisceau d'ultrasons et des moyens de pilotage du balayage de la sonde, adaptés pour mettre en oeuvre un balayage dudit objet par un faisceau d'ultrasons émis par la sonde,
- un récepteur d'ultrasons, adapté pour convertir le faisceau d'ultrasons transmis à travers ledit objet en signal électrique, et
- une unité de traitement, comprenant un amplificateur adapté pour appliquer un gain d'amplification au signal électrique obtenu par le récepteur, et une unité de commande configurée pour mesurer l'amplitude du signal amplifié et pour déduire de ladite mesure d'amplitude une cartographie dans laquelle chaque point d'une surface de projection dudit objet selon la direction d'exposition est associé à l'amplitude transmise audit point à travers ledit objet,
l'unité de commande étant en outre adaptée pour déterminer, pour une pluralité de points d'une cartographie réalisée à partir du balayage d'une pièce de référence par un faisceau d'ultrasons à un gain de référence prédéterminé, associant à chaque point du balayage l'amplitude transmise au niveau dudit point, des corrections de gain à apporter au gain de référence à chacun des points correspondants du balayage pour obtenir une amplitude (A_{c}) constante transmise à travers la pièce de référence pour l'ensemble des points de la cartographie,
et pour commander l'amplificateur afin d'appliquer, lors du balayage et de ladite mesure d'amplitude sur l'objet à inspecter, aux différents points du balayage du faisceau d'ultrasons, un gain d'amplification correspondant au gain de référence corrigé en fonction des corrections de gain ainsi déterminées.

Le procédé d'inspection proposé permet de s'affranchir de la géométrie d'un objet, pour que des diminutions d'énergie représentées sur la cartographie résultant de l'inspection ne soient liées qu'à des défauts structuraux de l'objet.

En effet, le fait d'utiliser une pièce de référence, dont on sait qu'elle est exempte de défauts, permet d'adapter le gain du signal de réception du faisceau d'ultrasons à l'épaisseur de l'objet inspecté au niveau du point d'exposition. Ainsi, l'amplitude du faisceau d'ultrasons est modifiée pour que l'objet paraisse présenter une épaisseur constante. Il en résulte que les variations d'amplitude transmise ne peuvent provenir que de défauts de l'objet inspecté, les variations liées à l'épaisseur de l'objet étant supprimées.

Ce procédé permet donc d'inspecter plus rapidement et avec une fiabilité améliorée des pièces présentant une géométrie complexe.

### DESCRIPTION DES FIGURES

D'autres caractéristiques, buts et avantages de la présente invention apparaîtront à la lecture de la description détaillée qui va suivre, au regard des figures annexées, données à titre d'exemples non limitatifs et sur lesquelles :
- La figure 1, déjà décrite, représente une aube de turbomachine,
- La figure 2 représente schématiquement un système d'inspection par transmission d'ultrasons,
- La figure 3 représente les principales étapes d'un procédé d'inspection par transmission d'ultrasons,
- Les figures 4a et 4b représentent respectivement les cartographies d'une aube de référence obtenues avant et après correction du gain du signal de réception des ultrasons,
- Les figures 5a et 5b (la figure 5a étant déjà décrite) représentent respectivement les cartographies d'une aube inspectée obtenues avant et après correction du gain du signal de réception des ultrasons,
- La figure 6 représente un profil axial d'un carter d'aubage de turbomachine,
- Les figures 7a et 7b représentent respectivement les cartographies d'une bride de carter d'aubage obtenues avant et après correction du gain du signal de réception des ultrasons,
- Les figures 8a et 8b représentent respectivement les cartographies d'un carter d'aubage inspecté obtenues avant et après correction du gain du signal de réception des ultrasons.

### DESCRIPTION DETAILLEE D'AU MOINS UN MODE DE MISE EN ŒUVRE DE L'INVENTION

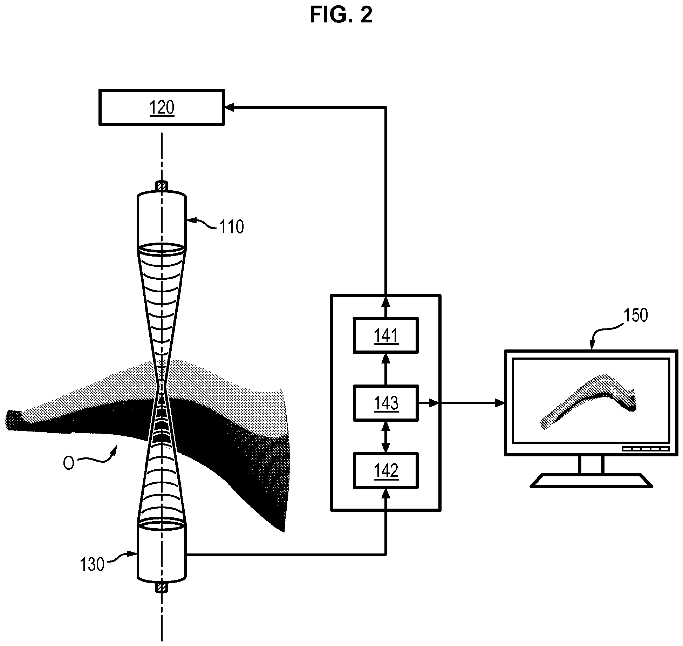

En référence à la figure 2, on a représenté schématiquement un système 100 d'inspection d'un objet O par transmission d'ultrasons utilisé pour la mise en oeuvre du procédé décrit ci-après.

Ce système comprend une sonde 110 d'émission d'un faisceau d'ultrasons, qui est déplacée selon un trajet prédéterminé par des moyens de pilotage 120 du balayage de ladite sonde.

De l'autre côté de l'objet O sondé est positionné le récepteur 130.

La sonde 110 et le récepteur 130 sont des transducteurs piézoélectriques, aptes à convertir un signal électrique en onde mécanique et réciproquement. Par conséquent, les rôles de la sonde et du récepteur peuvent être inversés.

En l'occurrence, la sonde est excitée électriquement par un signal fourni par un générateur 141 d'une unité de traitement 140 pour émettre des ondes ultrasonores, et le récepteur 130 convertit les ondes ultrasonores s'étant propagées au travers de l'objet sondé en un signal électrique.

L'amplitude du faisceau d'ultrasons transmis à travers l'objet est mesurée comme suit. Le signal électrique converti par le récepteur est transmis à l'unité de traitement 140, qui comporte un amplificateur 142 pour amplifier le signal électrique avec un gain voulu, ledit gain correspondant à un gain en amplitude du faisceau d'ultrasons transmis à travers l'objet O. L'unité de traitement comporte en outre une unité de commande 143, pouvant être avantageusement un processeur, qui mesure ensuite l'amplitude du signal électrique ainsi amplifié, ladite amplitude correspondant à l'amplitude du faisceau d'ultrasons.

L'unité de commande 143 est en outre adaptée pour associer à chaque point du balayage de l'objet sondé l'amplitude du faisceau d'ultrasons transmis à travers l'objet au niveau dudit point du balayage. Dans la présente, on entend par le mot « cartographie » cette mise en relation des points avec l'amplitude respective, qu'elle soit ou non suivie d'un affichage de l'objet en deux-dimensions représentant chaque point du balayage en une couleur particulière dépendant de son amplitude transmise.

Avantageusement, mais facultativement, le système d'inspection 100 comprend en outre un afficheur 150 permettant de représenter ladite cartographie.

L'unité de commande 142 est également adaptée pour commander le gain apporté par l'amplificateur 142 au faisceau d'ultrasons reçu par le récepteur 130, comme on va le voir ci-après.

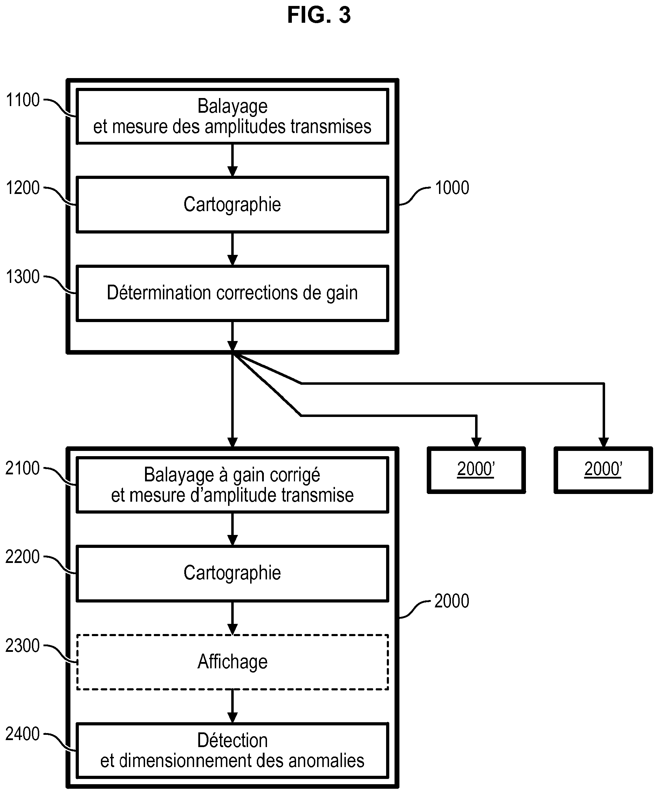

En référence à la figure 3, on a représenté les principales étapes d'un procédé d'inspection d'un objet par transmission d'ultrasons, mis en oeuvre par le système précédemment décrit.

Ce procédé comprend la mise en oeuvre d'un contrôle d'objet par transmission d'ultrasons de type « C-Scan », comprenant une première étape de mesure, au cours de laquelle on balaye un objet à inspecter avec un faisceau d'ultrasons, en amplifiant le signal reçu à partir des ultrasons transmis à travers l'objet un gain déterminé, et on mesure l'amplitude du faisceau d'ultrasons transmis à travers l'objet après amplification, et une seconde étape d'interprétation, au cours de laquelle, à partir de ces mesures d'amplitude, on établit une cartographie de l'objet en deux-dimensions, cette cartographie étant une projection de l'objet inspecté selon la direction d'exposition du faisceau d'ultrasons. L'objet y est représenté en couleurs ou en nuances de gris, chaque point de la cartographie étant associé, par sa couleur, à l'amplitude du faisceau d'ultrasons transmise à travers ledit objet.

Ce contrôle est d'abord mis en oeuvre sur une pièce de référence au cours d'une étape d'initialisation 1000, pour en déduire, pour cette pièce, des corrections de gain du signal transmis à apporter au gain de l'amplificateur 142, afin que l'amplitude des ultrasons transmis à travers ladite pièce soit constante.

Puis le procédé comprend une étape d'inspection 2000 proprement dite de chaque objet O à inspecter, comprenant la mise en oeuvre d'un contrôle de type « C-Scan » en utilisant comme gain de réception des ultrasons le gain corrigé à partir des corrections déterminées lors de l'étape d'initialisation.

On va maintenant décrire de manière détaillée l'étape d'initialisation 1000 réalisée sur une pièce de référence.

La pièce de référence est une pièce présentant la même géométrie, c'est-à-dire les mêmes dimensions, que l'objet à inspecter. Par exemple, si l'objet à inspecter est une aube de turbomachine, la pièce de référence est une aube de même conception.

De plus la pièce de référence doit avoir été sélectionnée et contrôlée par d'autres moyens pour vérifier qu'elle ne comporte pas de défaut.

Au cours d'une première sous-étape 1100, la pièce de référence est balayée par un faisceau d'ultrasons émis par la sonde avec une amplitude Aₛ prédéterminée.

Le récepteur reçoit le faisceau d'ultrasons et transmet un signal électrique correspondant à l'unité de traitement.

L'unité de commande 143 de l'unité de traitement mesure l'amplitude transmise Aₜ des ultrasons pour un gain de référence P_{ref} prédéterminé de l'amplificateur 142 au travers de ladite pièce en chaque point du balayage et en déduit au cours d'une sous-étape 1200 une cartographie associant à chaque point du balayage l'amplitude transmise au niveau dudit point.

L'unité de commande détermine alors au cours d'une sous-étape 1300, en chaque point du balayage, le gain d'amplification de l'énergie reçue G_{c} qui devrait être sélectionné pour que l'amplitude des ultrasons transmis à travers ladite pièce soit constante pour tous les points du balayage, et en déduit une liste de corrections à apporter au gain de référence G_{ref} en chaque point du balayage pour obtenir le gain corrigé G_{c}.

Cette détermination des corrections de gain peut être réalisée une fois que l'ensemble du balayage de la pièce a été réalisé. Alternativement, et de préférence, la détermination des corrections de gain peut être réalisée en temps réel, c'est-à-dire que la détermination et l'application d'une correction de gain à apporter au gain de référence G_{ref} au niveau d'un point du balayage de la pièce est déterminée au moment du balayage dudit point par l'unité de commande 143.

L'amplitude constante A_{c} transmise avec le gain corrigé est de préférence supérieure à 60% de l'amplitude Aₛ des ultrasons émis par la sonde, pour permettre ensuite une bonne résolution des données acquises. Avantageusement, l'amplitude avec le gain corrigé est comprise entre 70 et 90% de l'amplitude Aₛ des ultrasons émis, et préférablement de l'ordre de 80%. Ceci représente un bon compromis entre l'amplitude et la résolution obtenue.

Ainsi on obtient un tableau analogue à celui représenté ci-après, dans lequel on associe à chaque point du balayage une correction de gain en fonction de l'amplitude transmise lors du contrôle de la pièce de référence :

| Point | 1 | 2 | 3 | 4 | ... | N |
|---|---|---|---|---|---|---|
| Energie / amplitude transmise Aₜ avant correction en % de l'amplitude Aₛ | 95 | 80 | 70 | 60 | ... | 5 |
| Correction en décibels (dB) | -X | +0 | +Y | +Z | ... | +P |
| Energie / amplitude transmise après correction A_{c} en % l'amplitude Aₛ | 80 | 80 | 80 | 80 | 80 | 80 |

Le fait d'obtenir une amplitude transmise corrigée A_{c} constante pour la pièce de référence permet de s'affranchir des variations d'épaisseur de la pièce au niveau des différents points de balayage. Par conséquent, en appliquant ultérieurement un gain corrigé G_{c} à partir desdites corrections sur un objet à contrôler présentant la même géométrie que la pièce de référence, les seules variations de l'amplitude transmise résulteront directement de défauts dans la structure de l'objet contrôlé.

On a représenté en figure 4a une cartographie obtenue pour la pièce de référence en appliquant le gain de référence G_{ref} des ultrasons, et en figure 4b le gain corrigé G_{c}. On observe bien sur la cartographie que les variations dans l'amplitude transmise dues aux variations d'épaisseur de la pièce sont supprimées, et que l'amplitude transmise A_{c} après correction est constante.

De retour à la figure 3, on va maintenant décrire l'étape d'inspection 2000 d'un objet.

Comme indiqué précédemment, cet objet doit présenter la même géométrie et la même structure que la pièce de référence, pour que la liste des corrections établie pour les points de balayage soit valable.

Au cours d'une sous-étape 2100, l'objet est balayé par un faisceau d'ultrasons, dont le gain en chaque point du balayage est le gain corrigé G_{c}, c'est-à-dire le gain de référence G_{ref} auquel on a ajouté les corrections déterminées ci-avant.

Le récepteur capte le faisceau ultrasonore et l'unité de commande mesure l'amplitude du signal amplifié avec le gain corrigé.

Au cours d'une sous-étape 2200, l'unité de commande 143 réalise une cartographie de l'objet sondé, en associant à chaque point du balayage l'amplitude des ultrasons transmis à travers l'objet et reçus par le récepteur. Avantageusement, cette cartographie est représentée sur l'afficheur au cours d'une étape 2300, chaque point du balayage étant représenté avec une couleur ou une nuance de gris représentative du taux d'atténuation de l'amplitude transmise, ou de l'amplitude transmise elle-même.

On a représenté en figures 5a et 5b les cartographies obtenues pour une aube de turbomachine, respectivement avec un gain de réception des ultrasons non corrigé et corrigé.

Cette aube de turbomachine 10 est réalisée en matériau composite et présente un renfort métallique 11 sur son bord d'attaque, comme représenté sur la figure 1. Le procédé d'inspection est utilisé notamment pour identifier des défauts de collage du renfort sur le bord d'attaque. A cet égard, des défauts de collage ont été simulés dans l'aube testée des figures 5a et 5b en positionnant des inserts en matériau absorbant entre le bord d'attaque de l'aube et le renfort métallique.

On observe sur la figure 5b que les inserts sont beaucoup plus visibles, et leur forme plus nette, une fois les corrections de gain appliquées au signal de réception des ultrasons.

L'analyse de la cartographie obtenue, réalisée au cours d'une étape 2400, soit par un opérateur, soit de manière automatique, par exemple par mise en place d'un seuil d'amplitude transmise et comparaison des valeurs acquises aux différents points du balayage par rapport audit seuil, permet de détecter ou de visualiser très facilement sur les figures des anomalies à partir de l'amplitude transmise à travers la pièce pouvant correspondre à des défauts dans la structure interne des objets examinés. Ce procédé permet donc de repérer des défauts plus rapidement que les procédés proposés jusqu'à présent.

De plus, une fois l'établissement des corrections de gain réalisées pour une géométrie donnée, ces corrections sont applicables à toutes les pièces de même géométrie. L'étape d'inspection 2000 peut donc être répétée pour chaque nouvel objet à inspecter, sans avoir besoin de réitérer l'étape 1000, comme représenté sur la figure 3 avec les étapes 2000' et 2000".

Selon un mode de réalisation particulier, la pièce de référence et l'objet inspecté sont axisymétriques, c'est-à-dire symétrique de révolution autour d'un axe, leur surface résultant ainsi de la révolution d'une ligne autour de l'axe de symétrie. C'est le cas par exemple d'un carter d'aubage de turbomachine.

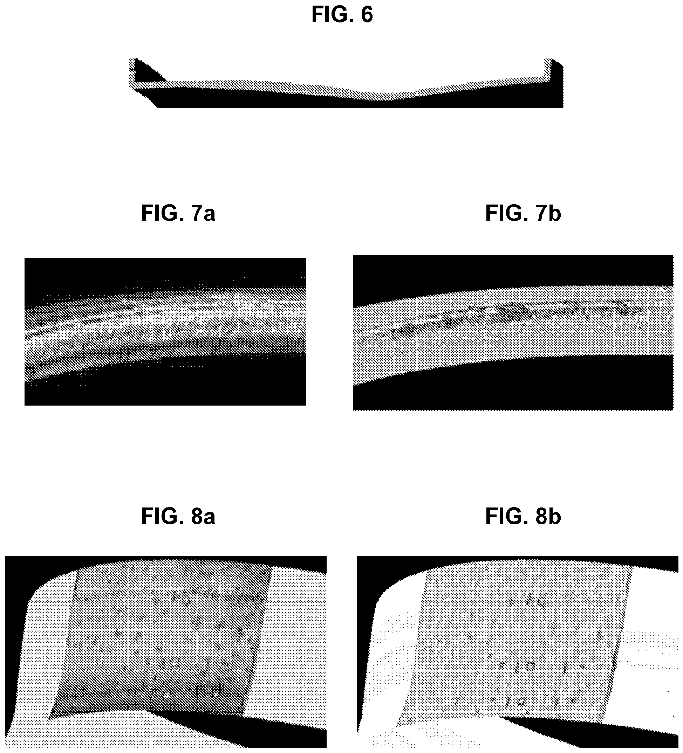

Les variations d'épaisseur d'une telle pièce dans la direction radiale autour de l'axe sont donc identiques sur toute la circonférence de la pièce. On a à cet égard illustré en figure 6 un exemple de profil de variation d'épaisseur d'un carter de turbomachine.

Dans ce cas, on peut simplifier la mise en oeuvre de l'étape 1000 d'initialisation du procédé en déterminant une liste de corrections de gain à apporter seulement pour un profil radial de la pièce, ces corrections de gain étant transposables à toute la circonférence de la pièce.

Par conséquent, au cours de l'étape 1100 de balayage de la pièce de référence par un faisceau d'ultrasons, la direction d'exposition du faisceau d'ultrasons est radiale par rapport à l'axe de symétrie, et la pièce de référence est balayée selon une ligne de ladite pièce à l'intersection de la surface de la pièce de référence avec un plan radial. Avantageusement, la pièce de référence est balayée selon une unique ligne, mais on peut également réitérer le balayage sur plusieurs lignes pour vérifier les corrections de gain obtenues.

Ensuite, lors de l'étape 2000 d'inspection de l'objet, l'ensemble de l'objet axisymétrique à inspecter est sondé selon des lignes de balayage du faisceau d'ultrasons identiques à la ligne de balayage réalisée pour établir les corrections de gain , en appliquant à chaque point de ladite ligne la correction correspondante.

Le procédé est particulièrement adapté à l'inspection de carters d'aubage de turbomachine en matériau composite, pour détecter des défauts de type porosités et délaminages dans le matériau, y compris au niveau de la bride permettant de fixer le carter à d'autres éléments de la turbomachine, cette bride présentant un encombrement rendant impossible son inspection dans le rayon faible (angle de 90°) et provoquant un désalignement des sondes entrainant une perte du signal.

On a représenté en figures 7a et 7b une cartographie obtenue pour la bride d'un carter d'aubage avant et après application des corrections de gain ; l'image obtenue avec une amplitude corrigée permet de localiser et dimensionner beaucoup plus simplement les défauts présents dans la pièce.

De même, sur les figures 8a et 8b, on a représenté une cartographie obtenue pour le carter, au niveau de la veine de celui-ci, avant et après application des corrections de gain. Les défauts carrés dans la structure du carter sont également bien plus visibles.

Le procédé d'inspection d'objets proposé n'est nullement limité à un type d'objets à inspecter en particulier, mais s'applique avantageusement à des aubes de turbomachines ou à des carters d'aubage de turbomachine, ou à tout autre objet présentant une géométrie complexe avec de nombreuses variations d'épaisseurs.

Plus généralement, l'invention est applicable à tout objet réalisé en matériau présentant un fort taux d'absorption des ultrasons tel qu'en un matériau composite, et en particulier dans un matériau composite tissé 3D ou 3D interlock, c'est-à-dire comprenant une structure de renfort prise dans une matrice, par exemple en matériau polymère.

Le procédé permet donc de contrôler facilement ces objets, et même de visualiser immédiatement les défauts qu'ils peuvent comporter.

## Revendications

1. Procédé d'inspection d'un objet (O) par transmission d'ultrasons, dans lequel on met en œuvre un balayage dudit objet par un faisceau d'ultrasons et une mesure de l'amplitude du faisceau d'ultrasons transmis à travers ledit objet (O), ladite mesure comprenant la conversion du faisceau d'ultrasons en signal électrique, l'application d'un gain d'amplification audit signal et la mesure de l'amplitude dudit signal,
afin d'en déduire une cartographie dans laquelle chaque point d'une surface de projection dudit objet selon la direction d'exposition est associé à l'amplitude du faisceau d'ultrasons transmise audit point à travers ledit objet, le procédé comprenant les étapes consistant à :
- mettre en oeuvre ledit balayage et ladite mesure d'amplitude (1100) sur une pièce de référence présentant une géométrie identique à l'objet à inspecter, afin d'en déduire (1200) une cartographie de ladite pièce associant à chaque point du balayage l'amplitude transmise au niveau dudit point, le gain d'amplification appliqué pour la mesure d'amplitude étant un gain de référence prédéterminé (G_{ref}),
- déterminer (1300), en chaque point de la cartographie de la pièce de référence, des corrections de gain à apporter au gain de référence (G_{ref}) à chacun des points correspondants du balayage pour obtenir une amplitude du faisceau d'ultrasons (A_{c}) transmise à travers la pièce de référence constante pour l'ensemble des points de la cartographie,
- mettre en oeuvre ledit balayage et ladite mesure d'amplitude (2100) sur l'objet à inspecter (O), en appliquant aux différents points du balayage un gain d'amplification (G_{c}) correspondant au gain de référence (G_{ref}) corrigé à partir des corrections de gain précédemment déterminées.

2. Procédé selon la revendication 1, dans lequel on déduit de ladite mesure d'amplitude sur l'objet à inspecter (O) une cartographie de l'objet (2200) et on analyse (2300) la cartographie ainsi obtenue afin de détecter une éventuelle anomalie quant à l'amplitude transmise à travers l'objet.

3. Procédé d'inspection selon l'une des revendications précédentes, dans lequel l'objet à inspecter et la pièce de référence sont axisymétriques, la direction d'exposition du faisceau d'ultrasons est radiale par rapport à l'axe de symétrie, et la pièce de référence est balayée selon une ligne de ladite pièce à l'intersection de la surface de la pièce de référence avec un plan radial.

4. Procédé d'inspection selon l'une des revendications précédentes, dans lequel l'objet à inspecter et la pièce de référence comprennent du matériau composite.

5. Procédé d'inspection selon l'une des revendications précédentes, dans lequel l'amplitude constante transmise (A_{c}) à travers la pièce de référence est supérieure à 60% de l'amplitude du faisceau d'ultrasons émis (Aₛ), et est avantageusement comprise entre 70 et 90% de ladite amplitude, et de préférence égale à 80% de ladite amplitude.

6. Procédé d'inspection selon l'une des revendications précédentes, dans lequel la correction de gain à apporter au gain de référence (G_{ref}) en un point du balayage est déterminée simultanément au balayage du point correspondant de la pièce de référence.

7. Utilisation du procédé selon l'une des revendications précédentes, pour l'inspection d'une aube (10).

8. Utilisation du procédé selon la revendication 3 pour l'inspection d'un carter d'aubage.

9. Utilisation du procédé selon l'une des revendications 1 à 6, pour l'inspection d'une aube (10) de soufflante de turbomachine, ladite aube étant formée en matériau composite et comprenant en outre un renfort en métal (11) collé sur son bord d'attaque, ledit procédé permettant de détecter d'éventuelles anomalies de collage.

10. Système d'inspection (100) d'un objet par transmission d'ultrasons, pour la mise en oeuvre du procédé selon l'une des revendications 1 à 6, comprenant :
- une sonde d'émission (110) d'un faisceau d'ultrasons et des moyens de pilotage (120) du balayage de la sonde, adaptés pour mettre en œuvre un balayage dudit objet par un faisceau d'ultrasons émis par la sonde,
- un récepteur d'ultrasons (130), adapté pour convertir le faisceau d'ultrasons transmis à travers ledit objet en signal électrique, et
- une unité de traitement (140), comprenant un amplificateur (142) adapté pour appliquer un gain d'amplification au signal électrique obtenu par le récepteur (130), et une unité de commande (143) configurée pour mesurer l'amplitude du signal amplifié et pour déduire de ladite mesure d'amplitude une cartographie dans laquelle chaque point d'une surface de projection dudit objet selon la direction d'exposition est associé à l'amplitude transmise audit point à travers ledit objet,
l'unité de commande (143) étant en outre adaptée pour déterminer, pour une pluralité de points d'une cartographie réalisée à partir du balayage d'une pièce de référence par un faisceau d'ultrasons à un gain de référence prédéterminé (G_{ref}), associant à chaque point du balayage l'amplitude transmise au niveau dudit point, des corrections de gain à apporter au gain de référence (G_{ref}) à chacun des points correspondants du balayage pour obtenir une amplitude (A_{c}) constante transmise à travers la pièce de référence pour l'ensemble des points de la cartographie,
et pour commander l'amplificateur (142) afin d'appliquer, lors du balayage et de ladite mesure d'amplitude sur l'objet à inspecter, aux différents points du balayage du faisceau d'ultrasons, un gain d'amplification (G_{c}) correspondant au gain de référence (G_{ref}) corrigé en fonction des corrections de gain ainsi déterminées.

## Patentansprüche

1. Verfahren zur Prüfung eines Objekts (O) durch Ultraschalldurchgang, in dem eine Abtastung des Objekts durch einen Ultraschallstrahl und eine Messung der Stärke des durch das Objekt (O) durchgelassenen Ultraschallstrahls durchgeführt werden, wobei die Messung die Umwandlung des Ultraschallstrahls in ein elektrisches Signal, die Anwendung eines Verstärkungsgewinns auf das Signal und die Messung der Stärke des Signals umfasst,
um davon eine Kartographie abzuleiten, in der jeder Punkt einer Projektionsoberfläche des Objekts gemäß der Bestrahlungsrichtung mit der Stärke des an dem Punkt durch das Objekt durchgelassenen Ultraschallstrahls verknüpft ist, wobei das Verfahren die Schritte umfasst, die bestehen aus dem:
- Durchführen der Abtastung und der Stärkenmessung (1100) bei einem Referenzteil, das eine Geometrie aufweist, die mit derjenigen des zu prüfenden Objekts identisch ist, um davon eine Kartographie des Teils durch Verknüpfen der im Bereich jedes Punkts durchgelassenen Stärke mit dem Punkt der Abtastung abzuleiten (1200), wobei der für die Stärkenmessung angewandte Verstärkungsgewinn ein vorbestimmter Referenzgewinn (G_{ref}) ist,
- an jedem Punkt der Kartographie des Referenzteils, Bestimmen (1300) von an jedem der entsprechenden Punkte der Abtastung am Referenzgewinn (G_{ref}) vorzunehmenden Gewinnkorrekturen, um eine Stärke (A_{c}) des durch das Referenzteil durchgelassenen Ultraschallstrahls zu erhalten, die für sämtliche Punkte der Kartographie konstant ist,
- Durchführen der Abtastung und der Stärkenmessung (2100) auf dem zu prüfenden Objekt (O) durch Anwenden eines Verstärkungsgewinns (G_{c}), der dem ausgehend von im Voraus bestimmten Gewinnkorrekturen korrigierten Referenzgewinn (G_{ref}) entspricht, auf die verschiedenen Punkte der Abtastung.

2. Verfahren nach Anspruch 1, wobei von der Stärkenmessung auf dem zu prüfenden Objekt (O) eine Kartographie des Objekts (2200) abgeleitet wird und die so erhaltene Kartographie analysiert wird (2300), um eine etwaige Anomalie bezüglich der durch das Objekt durchgelassenen Stärke festzustellen.

3. Prüfverfahren nach einem der vorhergehenden Ansprüche, wobei das zu prüfende Objekt und das Referenzteil axialsymmetrisch sind, die Bestrahlungsrichtung des Ultraschallstrahls in Bezug auf die Symmetrieachse radial ist und das Referenzteil entlang einer Linie des Teils an der Überschneidung der Oberfläche des Referenzteils mit einer radialen Ebene abgetastet wird.

4. Prüfverfahren nach einem der vorhergehenden Ansprüche, wobei das zu prüfende Objekt und das Referenzteil Verbundmaterial umfassen.

5. Prüfverfahren nach einem der vorhergehenden Ansprüche, wobei die konstante durch das Referenzteil durchgelassene Stärke (A_{c}) höher als 60% der Stärke (Aₛ) des emittierten Ultraschallstrahls ist, und vorteilhafterweise zwischen 70 und 90% der Stärke und, vorzugsweise gleich 80% der Stärke beträgt.

6. Prüfverfahren nach einem der vorhergehenden Ansprüche, wobei die Korrektur des an dem Referenzgewinn (G_{ref}) an einem Abtastpunkt vorzunehmenden Gewinnkorrektur gleichzeitig mit der Abtastung des entsprechenden Punkts des Referenzteils bestimmt wird.

7. Verwendung des Verfahrens nach einem der vorhergehenden Ansprüche für die Prüfung einer Schaufel (10) .

8. Verwendung des Verfahrens nach Anspruch 3 für die Prüfung eines Beschaufelungsgehäuses.

9. Verwendung des Verfahrens nach einem der Ansprüche 1 bis 6 für die Prüfung einer Turbomaschinen-Gebläseschaufel (10), wobei die Schaufel aus Verbundmaterial gebildet ist und ferner eine Metallverstärkung (11) umfasst, die an ihre Vorderkante geklebt ist, wobei das Verfahren das Feststellen etwaiger Klebeanomalien ermöglicht.

10. System (100) zur Prüfung eines Objekts durch Ultraschalldurchgang für die Durchführung des Verfahrens nach einem der Ansprüche 1 bis 6, das umfasst:
- eine Sonde (110) zur Emission eines Ultraschallstrahls und Mittel (120) zur Steuerung des Abtastens der Sonde, die dazu geeignet sind, ein Abtasten des Objekts durch einen von der Sonde emittierten Ultraschallstrahl durchzuführen,
- einen Ultraschallempfänger (130), der dazu geeignet ist, den durch das Objekt durchgelassenen Ultraschallstrahl in ein elektrisches Signal umzuwandeln, und
- eine Verarbeitungseinheit (140), die einen Verstärker (142), der dazu geeignet ist, einen Verstärkungsgewinn auf das von dem Empfänger (130) erhaltene elektrische Signal anzuwenden, und eine Steuereinheit (143) umfasst, die ausgestaltet ist, um die Stärke des verstärkten Signals zu messen und um von der Stärkenmessung eine Kartographie abzuleiten, in der jeder Punkt einer Projektionsoberfläche des Objekts entlang der Bestrahlungsrichtung mit der an dem Punkt durch das Objekt durchgelassenen Stärke verknüpft ist,
wobei die Steuereinheit (143) ferner dazu geeignet ist, für eine Vielzahl von Punkten einer ausgehend von der Abtastung eines Referenzteils mit einem Ultraschallstrahl bei einem vorbestimmten Referenzgewinn (G_{ref}) ausgeführte Kartographie, die mit jedem Punkt der Abtastung die im Bereich des Punkts durchgelassene Stärke verknüpft, Gewinnkorrekturen zu bestimmen, die an dem Referenzgewinn (G_{ref}) an jedem von den entsprechenden Punkten der Abtastung vorzunehmen sind, um eine konstante Stärke (A_{c}) zu erhalten, die durch das Referenzteil für sämtliche Punkte der Kartographie durchgelassen wird,
und um den Verstärker (142) zu steuern, um bei der Abtastung und der Messung der Stärke auf dem zu prüfenden Objekt an den verschiedenen Punkten der Abtastung des Ultraschallstrahls einen Verstärkungsgewinn (G_{c}) anzuwenden, der dem in Abhängigkeit von so bestimmten Gewinnkorrekturen korrigierten Referenzgewinn (G_{ref}) entspricht.

## Claims

1. An inspection method of an object (O) by ultrasound transmission, wherein a scanning of said object by an ultrasound beam and measurement of the amplitude of the ultrasound beam transmitted via said object (O) are carried out, said measurement comprising conversion of the ultrasound beam into an electrical signal, the application of an amplification gain to said signal and measurement of the amplitude of said signal,
to deduce therefrom a mapping in which each point of a projection surface of said object according to the direction of exposure is associated to the amplitude of the ultrasound beam transmitted to said point via said object, the method comprising the steps consisting of:
- carrying out said scanning and said amplitude measurement (1100) on a reference piece having a geometry identical to the object to be inspected, to deduce therefrom (1200) a mapping of said piece associating to each point of the scanning the transmitted amplitude at said point, the amplification gain applied for the amplitude measurement being a predetermined reference gain (G_{ref}),
- determining (1300), at each point of the mapping of the reference piece, gain corrections to be made to the reference gain (G_{ref}) at each of the corresponding points of the scanning to obtain a constant amplitude of the ultrasound beam (A_{c}) transmitted via the reference piece for all the points of the mapping,
- carrying out said scanning and said amplitude measurement (2100) on the object to be inspected (O), by applying to the different points of the scanning an amplification gain (G_{c}) corresponding to the reference gain (G_{ref}) corrected from the gain corrections previously determined.

2. The method according to claim 1, wherein a mapping of the object (2200) is deduced from said amplitude measurement on the object to be inspected (O) and the resulting mapping is analysed (2300) to detect any anomaly as to the amplitude transmitted via the object.

3. The inspection method according to one of the preceding claims, wherein the object to be inspected and the reference piece are axisymmetrical, the direction of exposure of the ultrasound beam is radial relative to the axis of symmetry, and the reference piece is scanned according to a line of said piece at the intersection of the surface of the reference piece with a radial plane.

4. The inspection method according to one of the preceding claims, wherein the object to be inspected and the reference piece comprise composite material.

5. The inspection method according to one of the preceding claims, wherein the constant amplitude (A_{c}) transmitted via the reference piece is greater than 60% of the amplitude of the ultrasound beam emitted (Aₛ), and is advantageously between 70 and 90% of said amplitude, and preferably equal to 80% of said amplitude.

6. The inspection method according to one of the preceding claims, wherein the gain correction to be made to the reference gain (G_{ref}) at a point of the scanning is determined simultaneously with scanning of the corresponding point of the reference piece.

7. Use of the method according to one of the preceding claims, for inspection of a blade (10).

8. Use of the method according to claim 3, for inspection of a blade casing.

9. Use of the method according to one of claims 1 to 6, for the inspection of a blade (10) of a turbomachine fan, said blade being formed from composite material and also comprising a metal reinforcement (11) stuck on its leading edge, said method detecting any adhesion anomalies.

10. An inspection system (100) of an object by ultrasound transmission, for carrying out the method according to one of claims 1 to 6, comprising:
- an emission probe (110) of an ultrasound beam and control means (120) of the scanning of the probe, adapted for performing scanning of said object by an ultrasound beam emitted by the probe,
- an ultrasound receiver (130), adapted to convert the ultrasound beam transmitted via said object into an electrical signal, and
- a processing unit (140), comprising an amplifier (142) adapted to apply an amplification gain to the electrical signal obtained by the receiver (130), and a control unit (143) configured to measure the amplitude of the amplified signal and to deduce from said amplitude measurement a mapping in which each point of a projection surface of said object according to the direction of exposure is associated to the amplitude transmitted to said point via said object,
the control unit (143) being further adapted to determine, for a plurality of points of a mapping performed from the scanning of a reference piece by an ultrasound beam at a predetermined reference gain (G_{ref}), associating to each point of the scanning the amplitude transmitted at said point, gain corrections to be made to the reference gain (G_{ref}) at each of the corresponding points of the scanning to obtain a constant amplitude (A_{c}) transmitted via the reference piece for all the points of the mapping,
and to control the amplifier (142) in order to apply, during the scanning and said amplitude measurement on the object to be inspected, to the different points of the scanning of the ultrasound beam, an amplification gain (G_{c}) corresponding to the reference gain (G_{ref}) corrected as a function of the gain corrections thus determined.
